(19) Europäisches Patentamt
European Patent Office
Office européen des brevets

(11) **EP 4 629 334 A1**

(12) **EUROPEAN PATENT APPLICATION**

(43) Date of publication:
08.10.2025 Bulletin 2025/41

(21) Application number: 25162053.0

(22) Date of filing: 06.03.2025

(51) International Patent Classification (IPC):
$H01M\ 4/38^{(2006.01)}$    $H01M\ 4/04^{(2006.01)}$
$H01M\ 4/134^{(2010.01)}$    $H01M\ 4/1395^{(2010.01)}$
$H01M\ 4/36^{(2006.01)}$    $H01M\ 4/133^{(2010.01)}$
$H01M\ 4/1393^{(2010.01)}$    $H01M\ 4/587^{(2010.01)}$
$H01M\ 10/0525^{(2010.01)}$    $H01M\ 4/02^{(2006.01)}$

(52) Cooperative Patent Classification (CPC):
H01M 4/587; H01M 4/133; H01M 4/134;
H01M 4/1393; H01M 4/1395; H01M 4/362;
H01M 4/386; H01M 10/0525; H01M 2004/021;
H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.03.2024 JP 2024042950

(71) Applicant: Prime Planet Energy & Solutions, Inc.
Chuo-ku, Tokyo 103-0022 (JP)

(72) Inventor: ONODERA, Naoto
Tokyo 103-0022 (JP)

(74) Representative: Kuhnen & Wacker
Patent- und Rechtsanwaltsbüro PartG mbB
Prinz-Ludwig-Straße 40A
85354 Freising (DE)

(54) **ELECTRICITY STORAGE DEVICE AND METHOD FOR MANUFACTURING ELECTRICITY STORAGE DEVICE**

(57) Provided is a technology to reduce a resistance increase rate while suppressing increase in an electrode plate expansion rate after a charge-discharge cycle of an electricity storage device having a negative electrode containing Si. According to the technology disclosed herein, an electricity storage device (100) including a negative electrode current collector (62, 262) and a negative electrode active material layer (64, 264) disposed on the negative electrode current collector (62, 262) is disclosed. The negative electrode active material layer (64, 264) includes, as a negative electrode active material particle, a Si-containing particle that is a composite particle of a graphite substrate having a void and silicon disposed within the void of the graphite substrate. The hardness of the Si-containing particle contained in at least one of layers, into which the negative electrode active material layer (64, 264) is partitioned in a thickness direction thereof, is lower than a hardness of the Si-containing particle contained in the other layer.

FIG.3

**Description**

BACKGROUND OF THE DISCLOSURE

1. Technical Field

The present disclosure relates to an electricity storage device and a method for manufacturing an electricity storage device.

2. Background

Examples of electricity storage devices include secondary batteries such as lithium-ion secondary batteries. In recent years, this kind of secondary battery has been suitably used in portable power sources for personal computers, mobile terminals, etc., as well as in power sources for vehicles such as battery electric vehicles (BEVs), hybrid electric vehicles (HEVs), and plug-in hybrid electric vehicles (PHEVs).

A negative electrode active material disclosed in Japanese Patent No. 6385749 (Patent Document 1) contains a mixture of a first active material powder composed of at least one selected from the group consisting of Si, a Si compound, Sn, and a Sn compound, and a second active material powder composed of plate-shaped graphite particles each having a thickness of 0.3 nm to 100 nm and a length in the longitudinal axis direction of 0.1 $\mu$m to 500 $\mu$m. The surface of the plate-shaped graphite particle is characterized by the adsorption of an aromatic vinyl copolymer containing a vinyl aromatic monomer unit represented by the following formula (1): -(CH$_2$-CH$_X$)- (1), wherein in the formula (1), X represents a phenyl group, a naphthyl group, an anthracenyl group or a pyrenyl group, and these groups may have substituents. Patent Document 1 states that such a configuration can improve cycle characteristics and initial efficiency in an electricity storage device and can achieve a high capacity.

Japanese Patent No. 5522817 (Patent Document 2) discloses a negative electrode active material composition for a lithium secondary battery. This composition contains a negative electrode active material, a polyimide precursor compound, and a polymer having a glass transition temperature of 50°C or lower. The polyimide precursor compound is a polyamic acid. The polymer is polyvinylidene fluoride. The negative electrode active material is SnO, SnO$_2$, SiO or SiO$_x$ (0 < x < 2). The content of the polyimide precursor compound is from 4.95 to 15% by weight. The content of the polymer in the composition is from 0.05 to 3% by weight. Patent Document 2 states that, by using this composition, a bending phenomenon of an electrode plate can be prevented, and flexibility can be imparted to the electrode plate to improve the capacity and life characteristics of a lithium secondary battery.

Japanese Patent No. 2006-196447 (Patent Document 3) discloses a negative electrode for a lithium-ion secondary battery. The negative electrode includes a current collector and an active material layer carried on the current collector. The active material layer includes a first layer and a second layer alternately laminated in a thickness direction of the active material layer. Patent Document 3 states that it is possible to improve cycle characteristics by simultaneously achieving high lithium ion conductivity and electron conductivity to thereby improve high rate charge-discharge characteristics, and reducing an expansion rate of the active material when reacting with lithium ions, while distributing stress due to expansion throughout the active material layer to relieve the stress.

WO 2020/031869 (Patent Document 4) discloses a non-aqueous electrolyte secondary battery including a positive electrode, a negative electrode, and an electrolyte solution. The negative electrode has a negative electrode composite material layer including a first negative electrode active material, and a negative electrode current collector to which the negative electrode composite material layer is attached. The first negative electrode active material includes a first lithium silicate phase containing lithium, silicon and oxygen, and first silicon particles dispersed in the first lithium silicate phase. The atomic ratio A1, i.e., O/Si, of oxygen to silicon in the first lithium silicate phase satisfies the relationship of 2 < A1 $\leq$ 3. The abundance ratio of the first negative electrode active material in the negative electrode composite material layer is greater on the surface side of the negative electrode than on the negative electrode current collector side of the negative electrode. Patent Document 4 states that such a configuration can improve the cycle characteristics of a non-aqueous electrolyte secondary battery.

SUMMARY

Meanwhile, it is known that a negative electrode containing silicon (Si) significantly expands during charging and discharging, causing the electrode plate of the negative electrode to harden, which reduces its reaction force characteristics.

For this reason, as described in Patent Documents 1 to 4 above, conventionally, research and development have been conducted actively. However, there is still room for improvement in softening an electrode plate of a negative electrode with a large Si content without reducing the performance of an electricity storage device.

In view of such circumstances, the present inventors have intended to reduce a resistance increase rate of an electricity storage device having a negative electrode containing Si while suppressing an increase in the electrode plate expansion rate after a charge-discharge cycle of the electricity storage device.

According to the technology disclosed herein, an electricity storage device including a negative electrode current collector and a negative electrode active material layer disposed on the negative electrode current collector is disclosed. The negative electrode active material layer includes, as a negative electrode active material particle, a Si-containing particle that is a composite particle of a graphite substrate having a void and silicon disposed within the void of the graphite substrate. The hardness of the Si-containing particle contained in at least one of layers, into which the negative electrode active material layer is partitioned in a thickness direction thereof, is lower than a hardness of the Si-containing particle contained in another layer. According to such a configuration, a resistance increase rate of an electricity storage device having a negative electrode containing Si can be reduced while suppressing an increase in the electrode plate expansion rate after a charge-discharge cycle of the electricity storage device.

According to the technology disclosed herein, a method of manufacturing an electricity storage device including a negative electrode current collector and a negative electrode active material layer disposed on the negative electrode current collector is disclosed. This manufacturing method includes disposing the negative electrode active material layer containing Si-containing particles as a negative electrode active material onto the negative electrode current collector. The disposing the negative electrode active material layer includes disposing a first layer using a first paste containing Si-containing particles with relatively low hardness, and disposing a second layer using a second paste containing Si-containing particles with relatively high hardness. The Si-containing particle is a composite particle of a graphite substrate having a void and silicon disposed within the void of the graphite substrate. According to such a configuration, for an electricity storage device having a negative electrode containing Si, a resistance increase rate of the electricity storage device can be reduced while suppressing an increase in the electrode plate expansion rate after a charge-discharge cycle.

BRIEF DESCRIPTION OF THE DRAWINGS

FIG. 1 is a longitudinal cross-sectional view of a lithium-ion secondary battery 100.
FIG. 2 is a schematic diagram of an electrode assembly 20.
FIG. 3 is a schematic cross-sectional view of a negative electrode 60.
FIG. 4 is a schematic cross-sectional view of a negative electrode 260.

DETAILED DESCRIPTION OF THE PREFERRED EMBODIMENTS

Hereinafter, embodiments of an electricity storage device disclosed herein will be described. The embodiments described herein are not especially intended to limit the technology disclosed herein. The technology disclosed herein is not limited to the embodiments described herein unless specifically mentioned. The drawings are schematically drawn and do not necessarily reflect actual objects. In addition, members or parts that exert the same action may be given the same reference numerals as appropriate, and duplicate descriptions may be omitted. In addition, the notation "from A to B" indicating a numerical range means "A or more and B or less" unless specifically mentioned, and also encompasses the meaning of "greater than A and lower than B".

In this specification, an "electricity storage device" refers to a device that performs charging and discharging through the transfer of charge carriers between a pair of electrodes (positive electrode and negative electrode) via an electrolyte. The term electricity storage device encompasses secondary batteries such as lithium-ion secondary batteries, nickel-metal hydride batteries, and nickel-cadmium batteries, as well as capacitors such as lithium-ion capacitors and electric double wall capacitors. Hereinafter, an embodiment wherein the electricity storage device is a lithium-ion secondary battery will be described.

<First Embodiment>

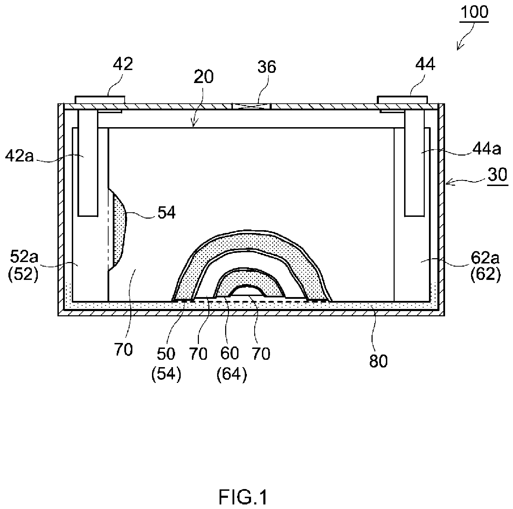

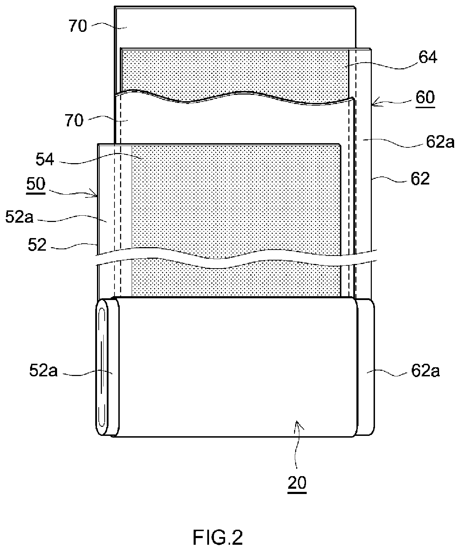

FIG. 1 is a longitudinal cross-sectional view of a lithium-ion secondary battery 100. FIG. 2 is a schematic diagram of an electrode assembly 20. As shown in FIG. 1, the lithium-ion secondary battery 100 includes the electrode assembly 20, a case 30, and a non-aqueous electrolyte solution 80.

As shown in FIGS. 1 and 2, the electrode assembly 20 is a wound electrode assembly in which a long-sheet-shaped positive electrode 50 and a long-sheet-shaped negative electrode 60 are superposed with a long-sheet-shaped separator 70 interposed therebetween and wound in a sheet longitudinal direction (hereinafter simply referred to as a "longitudinal direction"). In the electrode assembly 20, an exposed region 52a at the positive electrode 50 and an exposed region 62a at the negative electrode 60 protrude respectively outward from both ends thereof in a transverse direction orthogonal to the longitudinal direction.

As shown in FIGS. 1 and 2, the positive electrode 50 includes a long-sheet-shaped positive electrode current collector 52 and a positive electrode active material layer 54. The positive electrode current collector 52 is, for example, an aluminum foil. In this embodiment, the positive electrode current collector 52 has a region in which the positive electrode active material layer 54 is disposed and the exposed region 52a in which a surface of the positive electrode current collector 52 is partially exposed without the positive electrode active material layer 54 being disposed. The positive electrode active material layer 54 is disposed in a belt shape, for example, along the longitudinal direction, on one side or both sides (here, both sides) of the positive electrode current collector 52. The positive electrode active material layer 54 is not disposed on the end portion (the left end portion in the drawing) of a sheet transverse direction (hereinafter simply referred to as the "transverse direction"). The exposed region 52a is here a belt-shaped region at the end in the transverse direction (the left end in the drawing). As shown in FIG. 1, a current collector plate 42a is attached to the exposed region 52a.

The positive electrode active material layer 54 includes, for example, a positive electrode active material. The positive electrode active material is not particularly limited as long as the effects of the technology disclosed herein are achieved, and thus a positive electrode active material having a conventionally known composition used for this kind of usage can be used. The positive electrode active material may be, for example, a lithium composite oxide, a lithium transition metal phosphate compound, etc. The crystal structure of the positive electrode active material is not particularly limited and may have a layered structure, a spinel structure, an olivine structure, etc.

As the lithium composite oxide, a lithium transition metal composite oxide containing at least one of Ni, Co and Mn as a transition metal element(s) is preferable. Examples of the lithium transition metal composite oxide include lithium nickel-based composite oxides, lithium cobalt-based composite oxides, lithium manganese-based composite oxides, lithium nickel manganese-based composite oxides, lithium nickel cobalt manganese-based composite oxides, lithium nickel cobalt aluminum-based composite oxides, lithium iron nickel manganese-based composite oxide, etc. One kind of these positive electrode active materials may be used alone, or two or more kinds may be used in combination.

As used herein, the "lithium nickel cobalt manganese-based composite oxide" is a term that encompasses not only oxides including Li, Ni, Co, Mn and O as the constitutional elements, but also any other oxides containing one or two or more kinds of additional elements in addition to the above constitutional elements. Examples of the additional element include transition metal elements and typical metal elements, such as Mg, Ca, Al, Ti, V, Cr, Y, Zr, Nb, Mo, Hf, Ta, W, Na, Fe, Zn and Sn. The additive elements may be semimetallic elements such as B, C, Si and P, or non-metallic elements such as S, F, Cl, Br and I. This is also the case for the above-described lithium nickel-based composite oxides, lithium cobalt-based composite oxides, lithium manganese-based composite oxides, lithium nickel manganese-based composite oxides, lithium nickel cobalt aluminum-based composite oxides, lithium iron nickel manganese-based composite oxides, etc.

Examples of the lithium transition metal phosphate compound include lithium iron phosphate ($LiFePO_4$), lithium manganese phosphate ($LiMnPO_4$), lithium manganese iron phosphate, etc. For example, $LiNi_{0.33}Co_{0.33}Mn_{0.33}O_2$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, $LiNiO_2$, $LiCoO_2$, $LiFeO_2$, $LiMn_2O_4$, $LiNi_{0.5}Mn_{1.5}O_4$, etc., may be preferably used as the positive electrode active material.

The positive electrode active material layer 54 may include a conductive material, a binder, etc. besides the positive electrode active material. Examples of the conductive material include carbon blacks such as acetylene black (AB), and other carbon materials such as graphite. Examples of the binder include polyvinylidene fluoride (PVDF), etc. The content of the positive electrode active material with respect to the entirety of the positive electrode active material layer 54 is, for example, preferably 70% by mass or more, more preferably 80% by mass to 97% by mass, further preferably 85% by mass to 96% by mass. The content of the conductive material with respect to the entirety of the positive electrode active material layer 54 is, for example, 0.1% by mass to 20% by mass. The content of the binder with respect to the entirety of the positive electrode active material layer 54 is, for example, 0.5% by mass to 15% by mass.

As shown in FIGS. 1 and 2, the negative electrode 60 includes a long-sheet-shaped negative electrode current collector 62 and a negative electrode active material layer 64. The negative electrode current collector 62 is, for example, a copper foil. In this embodiment, the negative electrode current collector 62 has a region in which the negative electrode active material layer 64 is disposed and the exposed region 62a in which a surface of the negative electrode active material layer 64 is partially exposed without the negative electrode active material layer 64 being disposed. The negative electrode active material layer 64 is disposed in a belt shape along the longitudinal direction, for example, on one side or both sides (here, both sides) of the negative electrode current collector 62. The negative electrode active material layer 64 is not disposed at the end in the transverse direction (the right end in the drawing). The exposed region 62a is here a banded region at the end in the transverse direction (the right end in the drawing). As shown in FIG. 1, a current collector plate 44a is attached to the exposed region 62a.

The negative electrode active material layer 64 includes, for example, a negative electrode active material. In this embodiment, the negative electrode active material includes a Si-containing particle. The Si-containing particle is, for example, a composite particle of a graphite substrate having a void and silicon disposed within the void of the graphite substrate (such a particle being also referred to as a "Si/C particle" in the following description). The graphite substrate may be, for example, porous, or may also be fibrous or particulate. In this embodiment, the composite particle of the graphite substrate and silicon is a particle in which the graphite substrate and the silicon are integrated and act as one particle.

The Si-containing particle can be obtained according to a known method. For example, the Si-containing particles can be obtained by mixing fine particles of Si, a Si oxide, etc., and a carbon precursor (e.g., a petroleum pitch, a coal pitch, a phenolic resin, etc.), carbonizing the mixture, and spheroidizing the carbonized product. Alternatively, the Si-containing particles can be obtained by mixing a spherically-granulated graphite substrate and fine particles of Si, a Si-oxide, etc., in a dispersion medium, and drying the mixture to dispose microparticles within the voids of the graphite substrates.

By using the negative electrode active material containing silicon (Si), it is possible to achieve a higher capacity, a higher energy density, etc. of the electricity storage device. However, it is known that the expansion and contraction of the negative electrode active material containing Si become significant along with the charging and discharging of an electricity storage device, and an electrode plate of a negative electrode is hardened, thereby reducing the durability performance of the electricity storage device. For a negative electrode of an electricity storage device including a negative electrode active material containing Si, the present inventors have intensively studied a configuration that suppresses the expansion and contraction along with charging and discharging, and also suppresses an increase in the electrode plate hardness.

The hardness of the Si-containing particle contained in at least one of the layers, into which the negative electrode active material layer 64 is partitioned in its thickness direction, is lower than a hardness of the Si-containing particle contained in the other layer. **In** this embodiment, the negative electrode active material layer 64 includes at least two layers. One of the two layers contains Si-containing particles with relatively low hardness. The other layer contains Si-containing particles with relatively high hardness. In the following description, the Si-containing particle with the relatively low hardness is also referred to as a "first Si-containing particle", and the Si-containing particle with the relatively high hardness is also referred to as a "second Si-containing particle". The layer structure in the negative electrode active material layer 64 will be further described later.

The hardness of the first Si-containing particle and the hardness of the second Si-containing particle in this embodiment are specified by the compressive modulus of each particle. The compression modulus of the second Si-containing particle is generally equal to or greater than 1.5 times, for example, 1.7 times that of the first Si-containing particle. To better achieve the effects of the technology disclosed herein, this compression modulus is preferably equal to or greater than twice, and more preferably 2.2 times. From a similar viewpoint, the compressive modulus of the second Si-containing particle is generally equal to or less than 5 times, for example, 4.5 times, preferably 4 times, and more preferably 3.5 times that of the first Si-containing particle. The compression modulus of the first Si-containing particle and the compression modulus of the second Si-containing particle can be changed to desired compression moduli, for example, by the porosity of the graphite substrate, the kind of the graphite substrate, surface coating, etc.

The first Si-containing particle may have a compression modulus of generally 250 MPa or more and less than 2,000 MPa. From the viewpoint of better suppression of the expansion and contraction of the negative electrode 60 during the charging and discharging of the lithium-ion secondary battery 100, the compression modulus of the first Si-containing particle is, for example, 1,800 MPa or less, preferably 1,600 MPa or less, more preferably 1,400 MPa or less. From the viewpoint of achieving an appropriate hardness for the negative electrode active material layer 64, the compression modulus of the first Si-containing particle is, for example, 500 MPa or more, preferably 750 MPa or more, more preferably 1,000 MPa or more. The second Si-containing particle may have a compression modulus of generally from 2,000 MPa to 5,000 MPa or less. From the viewpoint of suppressing the deformation of the negative electrode 60 during the charging and discharging of the lithium-ion secondary battery 100, the compression modulus of the second Si-containing particle is, for example, 4,500 MPa or less, preferably 4,000 MPa or less, more preferably 3,500 MPa or less. From the viewpoint of suppressing the conductive pass break of the negative electrode active material layer 64 during the charging and discharging of the lithium-ion secondary battery 100, the compression modulus of the second Si-containing particle is, for example, 2,200 MPa or more, preferably 2,400 MPa or more, more preferably 2,600 MPa or more, even more preferably 2,800 MPa or more.

The compression modulus of the Si-containing particle (hereinafter, in the case where the first Si-containing particle and the second Si-containing particle are not distinguished, they are also simply referred to as the "Si-containing particle") can be measured, for example, by using a commercially available tester. As the commercially available tester, for example, a microcompression tester "MCT-211" manufactured by Shimadzu Corporation can be preferably used. In the method for measuring the compressive modulus of the Si-containing particle, the tester is first used to compress one particle from the Si-containing particles in the vertical direction to measure a displacement (a compressive displacement) and a stress (a compressive stress) during the compression. The average particle diameter of the Si-containing particle is then divided by the compressive displacement to calculate a compressive strain. Then, using the following equation (A), a compressive modulus for one particle from the Si-containing particles is calculated.

$$Compression\ Modulus\ (MPa) = Compression\ Stress\ (MPa)\ /\ Compression\ Strain$$

(A)

In this embodiment, the compression moduli of at least five particles from the Si-containing particles are calculated, and an arithmetic average value thereof is determined as the compression modulus of the Si-containing particle. The at least five Si-containing particles here are Si-containing particles each having a particle diameter of 90% to 110% of the average particle diameter. The particle diameter of the Si-containing particle can be measured when the compression modulus is measured by the tester. The average particle diameter of the Si-containing particle will be described later.

The average particle diameter of the Si-containing particle is generally 0.5 $\mu$m to 20 $\mu$m. From the viewpoint of achieving the effects of the technology disclosed herein, the average particle diameter is, for example, 1 $\mu$m or more, preferably 3 $\mu$m or more, more preferably 5 $\mu$m or more. From a similar viewpoint, the average particle diameter is, for example, 15 $\mu$m or less, preferably 12 $\mu$m or less, more preferably 10 $\mu$m or less. The average particle diameter of the first Si-containing particle and the average particle diameter of the second Si-containing particle may be the same or different. In this specification, the "average particle diameter" as to the particle refers to a particle diameter ($D_{50}$ particle diameter) equivalent to 50% cumulative from the fine particle side in a volume-based particle diameter distribution, provided through the particle diameter distribution measurement based on the laser diffraction-light scattering method.

The negative electrode active material layer 64 may further contain graphite particles as the negative electrode active material. The graphite particle as the negative electrode active material may be, for example, an artificial graphite, a natural graphite, etc. The graphite particle may have a coating layer of amorphous carbon on its surface. Although not particularly limited, the graphite particle has a substantially spherical shape, for example. In this specification, the "substantially spherical shape" as to the graphite particle refers to that an average aspect ratio based on electron microscopy (SEM) observation of the graphite particle is from 1 to 2 (preferably from 1 to 1.5). Note that the average aspect ratio is obtained, for example, by obtaining a plane SEM observation image of a graphite particle, randomly selecting a plurality (e.g., from 10 to 100) of graphite particles from the SEM observation image, calculating the respective aspect ratios, and calculating an arithmetic average value thereof. The average particle diameter of the graphite particle may be, for example, 5 $\mu$m to 30 $\mu$m, or may be 10 $\mu$m to 20 $\mu$m. The compression modulus of the graphite particle may be, for example, 100 MPa to 300 MPa, preferably 150 MPa to 200 MPa.

The content of the graphite particle with respect to the entirety of the negative electrode active material is generally 20% by mass to 80% by mass, preferably 40% by mass to 75% by mass, more preferably 50% by mass to 70% by mass.

The negative electrode active material layer 64 may contain a conductive material in addition to the negative electrode active material. As the conductive material, carbon nanotubes such as single-walled carbon nanotubes (SWCNT), double-walled carbon nanotubes (DWCNT) and multiwall carbon nanotubes (MWCNT); carbon blacks such as acetylene black (AB); carbon fibers; etc. may be used. Among them, from the viewpoint of improving the cycle characteristic of the lithium-ion secondary battery 100, carbon nanotubes are preferable, and single-walled carbon nanotubes are more preferable as the conductive material.

The rate of the negative electrode active material with respect to the entirety of the negative electrode active material layer 64 is, for example, 70% by mass or more, preferably 80% by mass or more, more preferably 90% by mass to 99% by mass, or may be 95% by mass to 99% by mass. Furthermore, the proportion of the conductive material in the entirety of the negative electrode active material layer 64 may be, for example, 0.01% to 1% by mass.

The negative electrode active material layer 64 may contain a binder in addition to the negative electrode active material. Examples of the binder include carboxymethyl cellulose (CMC), polyacrylic acid (PAA), styrene butadiene rubber (SBR), polyvinylidene fluoride (PVDF), etc. Among them, carboxymethyl cellulose (CMC), polyacrylic acid (PAA) and styrene butadiene rubber (SBR) may be preferably used. The proportion of the binder may be, for example, 0.5% by mass to 10% by mass when the entirety of the negative electrode active material layer 64 is set as 100% by mass.

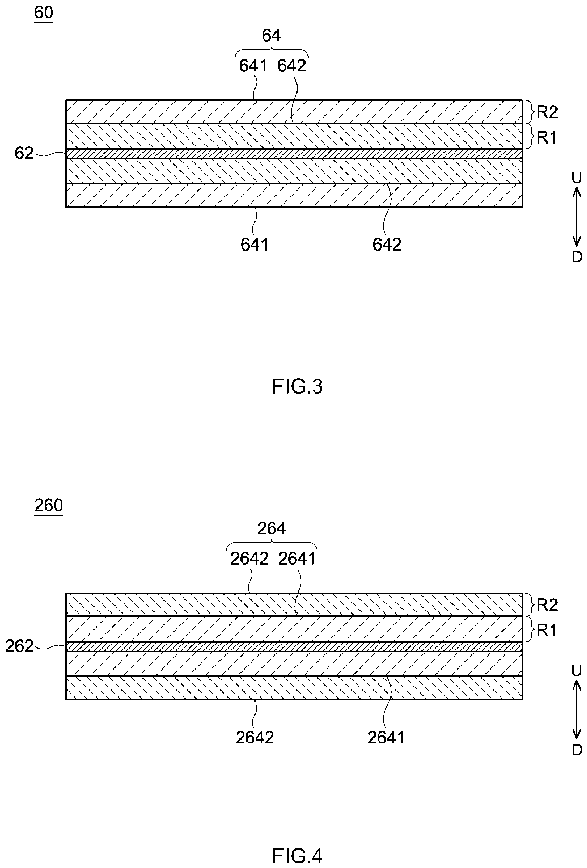

FIG. 3 is a schematic cross-sectional view of the negative electrode 60. In FIG. 3, a partial cross-sectional structure in the negative electrode 60 is schematically shown. As shown in FIG. 3, the negative electrode active material layer 64 has a first region R1 and a second region R2. In this embodiment, the first region R1 is a region relatively close to the negative electrode current collector 62 when the negative electrode active material layer 64 is bisected in a thickness direction (the up and down direction in FIG. 3). The second region R2 is a region far from the negative electrode current collector 62 when the negative electrode active material layer 64 is bisected in the thickness direction.

In the form shown in FIG. 3, the negative electrode active material layer 64 includes a first layer 641 and a second layer 642. In this embodiment, the first layer 641 is disposed in the second region R2. The second layer 642 is disposed in the first region R1. As shown in FIG. 3, the first layer 641 is disposed on the negative electrode current collector 62. In this embodiment, the second layer 642 is disposed in the first region R1. The second layer 642 is disposed on the first layer 641, here on the surface layer side of the negative electrode active material layer 64. A ratio (T1 : T2) of a thickness T1 of the first layer 641 to a thickness T2 of the second layer 642 is not particularly limited. The ratio (T1 : T2) is, for example, from 10 : 90 to 90 : 10.

In this embodiment, the first layer 641 includes first Si-containing particles. The second layer 642 includes second Si-containing particles. In this embodiment, the first layer 641, which includes the first Si-containing particles, and the second layer 642, which include the second Si-containing particles, can be explained, for example, by the following procedure. First, the lithium-ion secondary battery 100 to be inspected is prepared. The lithium-ion secondary battery 100 is then disassembled to remove the negative electrode 60. The negative electrode active material layer 64 is then evenly divided into from 3 to 20 layers in the thickness direction from a surface of the negative electrode active material layer 64 toward the negative electrode current collector 62, and the compression modulus of the Si-containing particle contained in each layer is measured by the above-described procedure. Such a measurement of the compression modulus can determine, for example, whether or not each layer falls within either the first layer 641 or the second layer 642. It should be noted that the negative electrode active material layer 64 contains both graphite particles and the Si-containing particles, and it is possible to distinguish between these particles by, for example, using an analytical method such as a scanning electron microscope energy-dispersive X-ray spectroscopy (SEM-EDX).

A method for fabricating (method for manufacturing) the negative electrode 60 includes, for example, disposing the first layer 641 on the negative electrode current collector 62 using a first paste containing Si-containing particles with relatively low hardness (first Si-containing particles), and disposing the second layer 642 using a second paste containing Si-containing particles with relatively high hardness (second Si-containing particles). By implementing this method, the negative electrode 60 having the characteristics mentioned above can be fabricated, and further the electricity storage device including the negative electrode 60 (lithium-ion secondary battery 100) can be fabricated.

The method for fabricating (method for manufacturing) the negative electrode 60 in this embodiment includes a preparation step, a first mixing step, a second mixing step, a third mixing step, a first application step, a first drying step, a first pressing step, a second application step, a second drying step, and a second pressing step.

The preparation step is, for example, a step of preparing a raw material of the negative electrode active material layer 64. In this embodiment, graphite particles, the first Si-containing particles, the second Si-containing particles, the conductive material, and the binder are prepared in the preparation step. The raw materials listed here are as described above.

The first mixing step is, for example, a step of dry-mixing the graphite particles, the first Si-containing particles or the second Si-containing particles, and a first binder. In this embodiment, the graphite particles, the first Si-containing particles, and the first binder are dry-mixed in the first mixing step to prepare a first mixed powder. Similarly, the graphite particles, the second Si-containing particles, and the first binder are dry-mixed to prepare a second mixed powder. The first binder is, for example, carboxymethyl cellulose and polyacrylic acid. The dry mixing in the first mixing step can be used without particular limitation, for example, with a conventionally known mixing device used for this kind of usage.

The second mixing step is, for example, a step of solid-kneading the first mixed powder or the second mixed powder prepared in the first mixing step, the conductive material, and the dispersion medium. In this embodiment, in the second mixing step, the first mixed powder, the conductive material and water are solid-kneaded to obtain a first kneaded product. Similarly, the second mixed powder, the conductive material and water are solid-kneaded to obtain a second kneaded product. The solid fraction of the first kneaded product and the solid fraction of the second kneaded product are generally 50% to 80%, preferably from 60% to 70%. The solid-kneading in the second mixing step can be used without particular limitation, for example, with a conventionally known mixing device used for this kind of usage.

The third mixing step is, for example, a step of mixing the first kneaded product or the second kneaded product obtained in the second mixing step, the second binder and a dispersion medium. In this embodiment, in the third mixing step, the first kneaded product, the second binder and water are mixed to obtain the first paste. Similarly, the second kneaded product, the second binder and water are mixed to obtain the second paste. The second binder is, for example, a styrene-butadiene rubber. The mixing in the third mixing step can be used without particular limitation, for example, with a conventionally known mixing device used for this kind of usage.

The first application step is, for example, a step of applying the first paste or the second paste obtained in the third mixing step onto the negative electrode current collector 62. In this embodiment, the second paste is applied in a band shape on a copper foil as the negative electrode current collector 62. The method of application is not particularly limited, and it is desirable to adopt a conventionally known method (the same applies to the second coating step). The first drying step is, for example, a step of drying the second paste applied onto the negative electrode current collector 62 in the first application step to obtain a dried film. The conditions for the drying are not particularly limited, and it is desirable to adopt the conditions for fabricating a negative electrode of this kind as appropriate (the same applies to the second drying step). The first pressing step is, for example, a step of pressing the dried film obtained in the first drying step to obtain the second layer 642. The conditions for the pressing are not particularly limited, and the conditions for fabricating this kind of negative electrode may be adopted as appropriate (the same applies to the second pressing step).

The second application step is, for example, a step of applying the first paste or the second paste obtained in the third mixing step onto the dry film after the first pressing step. In this embodiment, the first paste is applied onto the second layer 642 formed by the first pressing step. The second drying step is, for example, a step of drying the first paste applied onto the second layer 642 in the second application step to obtain a dried film. The second pressing step is, for example, a step of pressing the dried film obtained in the second drying step to obtain the first layer 641. Incidentally, the method for manufacturing the negative electrode 60 mentioned above is merely an example. For example, the method for manufacturing the negative electrode 60 may not include part of the steps mentioned above, or may include any steps, if necessary. In the above-mentioned method, the first paste is applied and dried, and the second paste is then applied, but the second paste may be applied after applying the first paste and before the drying, or the first paste and the second paste may be applied at the same time. Alternatively, after the first paste may be applied and dried, the second paste may be applied and dried, and then the pastes may be pressed.

Examples of the separator 70 include a porous sheet (film) formed of a resin material such as polyethylene (PE), polypropylene (PP), polyester, cellulose or polyamide. The porous sheet may have a monolayer structure or may have a laminated structure of two or more layers (e.g., a three-layer structure with PP layers laminated on both sides of a PE layer). The surface of the separator 70 may be disposed with a heat resistant layer (HRL).

The case 30 is an outer container that houses, for example, the electrode assembly 20 and the non-aqueous electrolyte solution 80. The case 30 is here a flat, rectangular case. As shown in FIG. 1, the case 30 has a positive electrode terminal 42, a negative electrode terminal 44, a safety valve 36, and a liquid filling hole (not illustrated). The positive electrode terminal 42 is, for example, an external connection terminal on the positive electrode side. The positive electrode terminal 42 is here electrically connected to the positive electrode 50 of the electrode assembly 20 through the current collector plate 42a. The negative electrode terminal 44 is, for example, an external connection terminal on the negative electrode side. The negative electrode terminal 44 is here electrically connected to the negative electrode 60 of the electrode assembly 20 through the current collector plate 44a. The safety valve 36 is, for example, a thin-walled portion that is set to release an internal pressure in the case 30 when the internal pressure rises to a predetermined level or higher. The liquid injection hole is, for example, a site for injecting the non-aqueous electrolyte solution 80 into the case 30.

The non-aqueous electrolyte solution 80 includes, for example, a non-aqueous solvent and a support salt. Examples of the non-aqueous solvent include organic solvents such as various carbonates, ethers, esters, nitriles, sulfones and lactones used for this kind of usage. Among them, carbonates can be preferably used. Examples of the carbonates include ethylene carbonate (EC), propylene carbonate (PC), diethyl carbonate (DEC), dimethyl carbonate (DMC), ethyl methyl carbonate (EMC), fluoroethylene carbonate (FEC) (preferably monofluoroethylene carbonate), monofluoromethyl difluoromethyl carbonate (F-DMC), trifluorodimethyl carbonate (TFDMC), etc. As the non-aqueous solvent, one non-aqueous solvent may be used alone, or two or more non-aqueous solvents may be used in combination. Examples of the support salt include lithium salts such as $LiPF_6$, $LiBF_4$ and $LiClO_4$. The concentration of the support salt may be, for example, 0.7 mol/L to 1.4 mol/L. The non-aqueous electrolyte solution 80 can optionally include an additive used for this kind of usage. Examples of the additive may include film-forming agents such as $LiB(C_2O_4)_2$(LiBOB) and $LiBF_2(C_2O_4)$, gas generating agents such as biphenyl (BP) and cyclohexylbenzene (CHB), thickening agents, etc.

The lithium-ion secondary battery 100 is available for various applications. Preferable applications include power sources for driving installed in vehicles such as battery electric vehicles (BEVs), hybrid vehicles (HEVs) and plug-in hybrid vehicles (PHEVs). The lithium-ion secondary battery 100 can be used, for example, as a storage battery for a small-scale power storage device, etc. The lithium-ion secondary battery 100 can also be used, for example, in the form of a battery assembly in which multiple battery cells are connected in series and/or in parallel.

In this embodiment, the lithium-ion secondary battery 100 includes the negative electrode current collector 62 and the negative electrode active material layer 64 disposed on the negative electrode current collector 62. The negative electrode active material layer 64 contains a Si-containing particle as a negative electrode active material particle. The Si-containing particle is a composite particle of a graphite substrate having a void and silicon disposed within the void of the graphite substrate. The hardness of the Si-containing particle contained in at least one of the layers, into which the negative electrode active material layer 64 is partitioned in its thickness direction, is lower than the hardness of the Si-containing particle contained in the other layer.

In the lithium-ion secondary battery 100, the negative electrode active material layer 64 contains the Si-containing particles as the negative electrode active material. Each Si-containing particle includes a porous graphite substrate, and Si disposed within the void of the graphite substrate. In this way, the void can alleviate the expansion of Si when the Si is expanded due to charging and discharging, thereby suppressing an increase in the thickness of the negative electrode 60. The negative electrode active material layer 64 has, in the thickness direction, at least a layer containing Si-containing particles with relatively low hardness and a layer containing Si-containing particles with relatively high hardness. The layer containing the Si-containing particles with the relatively low hardness is more likely to follow changes in shape of the electrode plate during expansion and contraction in the charging and discharging than the other layer is. This can suppress the increase in the electrode plate expansion rate after a charge-discharge cycle. On the other hand, the layer containing the Si-containing particles with the relatively high hardness is difficult to deform during the expansion and contraction in the charging and discharging, so that a conductive pass break is less likely to occur. This can suppress the increase in the electrode plate expansion rate and reduce a resistance increase rate after the charge-discharge cycle. That is, in the lithium-ion secondary battery 100, a high capacitance and a high energy density are achieved, while the increase in the electrode plate expansion rate due to the expansion and contraction in the charge-discharge cycle is suppressed, and the resistance increase rate is reduced.

When the negative electrode active material layer 64 is bisected into two regions in the thickness direction, the region relatively close to the negative electrode current collector 62 is defined as the first region R1, and the other region relatively far from the negative electrode current collector 62 is defined as the second region R2, the first layer 641 containing the Si-containing particles with the relatively low hardness (the first Si-containing particles) may be disposed in the second region R2. In the negative electrode active material layer 64, the second region R2 farther from the negative electrode current collector 62 is more susceptible to expansion and contraction, and is deformed easily. For this reason, by disposing the first layer 641 containing the first Si-containing particles in the second region R2, the stress caused by expansion and contraction can be alleviated following the expansion and contraction of the negative electrode 60, and thus the effect of suppressing an increase in the electrode plate expansion rate after the charge-discharge cycle can be further enhanced.

When the compression modulus of the first Si-containing particle is set as 1, the compression modulus of the second Si-containing particle may be equal to or greater than twice that of the first Si-containing particle. By setting the compression modulus of the first Si-containing particle and the compression modulus of the second Si-containing particle as described above, the effects of the technology disclosed herein can be better achieved.

The first Si-containing particle may have a compression modulus of 250 MPa or more and less than 2,000 MPa. By setting the compression modulus of the first Si-containing particle within such a range, the effects of the technology disclosed herein can be better achieved. The second Si-containing particle may have a compression modulus of 2,000 MPa or more and 5,000 MPa or less. By setting the compression modulus of the second Si-containing particle within such a range, the effects of the technology disclosed herein can be better achieved.

The ratio (T1 : T2) of a thickness T1 of the first layer 641 to a thickness T2 of the second layer 642 may be from 10 : 90 to 90 : 10. By setting the ratio of the thickness T1 to the thickness T2 within such a range, the effects of the technology disclosed herein can be better achieved.

The negative electrode active material layer 64 may further contain graphite particles. The graphite particle has a smaller degree of expansion and contraction associated with the charging and discharging of the lithium-ion secondary battery 100 than that of the Si-containing particle. For this reason, since the negative electrode active material layer 64 contains the graphite particles, the degree of expansion and contraction can be suppressed because the graphite particle bears part of the functions of the negative electrode active material.

The method for manufacturing the lithium-ion secondary battery 100 is a method for manufacturing the electricity storage device that includes the negative electrode current collector 62 and the negative electrode active material layer 64 disposed on the negative electrode current collector 62. The manufacturing method includes disposing the negative electrode active material layer 64 including the Si-containing particles as the negative electrode active material onto the negative electrode current collector 62. The disposing the negative electrode active material layer 64 includes disposing the first layer 641 using the first paste containing the Si-containing particles with the relatively low hardness (the first Si-containing particles), and disposing the second layer 642 using the second paste containing the Si-containing particles with the relatively high hardness (the second Si-containing particles). The Si-containing particle is a composite particle composed of a graphite substrate having a void and silicon disposed within the void of the graphite substrate. In the lithium-ion secondary battery 100 manufactured by performing such a manufacturing method, an increase in the electrode plate expansion rate in the negative electrode 60 after the charge-discharge cycle is suppressed, and a resistance increase rate is reduced.

In this manufacturing method, the preparation of the first paste and the preparation of the second paste may include dry-mixing the first Si-containing particles or the second Si-containing particles and the first binder to obtain the first mixed powder or the second mixed powder; solid-kneading the first mixed powder or the second mixed powder, the conductive material, and the dispersion medium to obtain the first kneaded product or the second kneaded product; and mixing the first kneaded product or the second kneaded product, the second binder, and the dispersion medium. In this way, the first paste and the second paste that are preferable for achieving the effects of the technology disclosed herein can be prepared.

This manufacturing method may include applying the second paste onto the negative electrode current collector 62 to form the second layer 642 and applying the first paste onto the second layer 642 to form the first layer 641. Thus, the negative electrode 60 having a configuration that is preferable for achieving the effects of the technology disclosed herein can be prepared.

<Second Embodiment>

FIG. 4 is a schematic cross-sectional view of a negative electrode 260. In FIG. 4, a partial cross-sectional structure in the negative electrode 260 is schematically illustrated. As illustrated in FIG. 4, a negative electrode active material layer 264 includes a first layer 2641 containing first Si-containing particles and a second layer 2642 containing second Si-containing particles. In this embodiment, the first layer 2641 is disposed in the first region R1. The second layer 2642 is disposed in the second region R2. As illustrated in FIG. 3, the first layer 2641 is disposed on a negative electrode current collector 262. In this embodiment, the second layer 2642 is disposed on the first layer 2641, here on the surface layer side of the negative electrode active material layer 264. In this embodiment, the first layer 2641 containing Si-containing particles with the relatively high hardness (first Si-containing particles) is disposed in the first region R1 relatively close to the negative electrode current collector 262. In this way, the liquid flowability of the electrolyte solution is improved on the side of the negative electrode active material layer 264 opposite to the negative electrode current collector 262. For this reason, according to such a configuration, an effect of reducing a resistance increase rate after the charge-discharge cycle among the effects of the technology disclosed herein can be particularly well achieved.

The method for manufacturing the lithium-ion secondary battery 100 in this embodiment includes applying the first paste onto the negative electrode current collector 262 to form the first layer 2641 and applying the second paste onto the first layer 2641 to form the second layer 2642. In this way, the lithium-ion secondary battery 100 in which the effect of reducing a resistance increase rate after the charge-discharge cycle among the effects of the technology disclosed herein is particularly well achieved can be manufactured.

Hereinafter, test examples relating to the technology disclosed herein are explained. However, they do not intend to limit the technology disclosed herein to those shown in the test examples below.

[Manufacture of Test Cells]

<Example 1>

As negative electrode active materials, first Si-containing particles, second Si-containing particles, and graphite particles were prepared. The first Si-containing particle was a Si/C particle having a compression modulus of 1,100 MPa and an average particle diameter of 7 $\mu$m. The second Si-containing particle was a Si/C particle having a compression modulus of 3,400 MPa and an average particle diameter of 8 $\mu$m. For the graphite particle, the compression modulus was 180 MPa, and the average particle diameter was 14 $\mu$m. As a conductive material, single-walled carbon nanotubes (SWCNTs) were prepared. As binders, carboxymethyl cellulose (CMC), polyacrylic acid (PAA) and styrene butadiene rubber (SBR) were prepared. The prepared materials were kneaded with water as a dispersion medium so as to have a mass ratio of graphite particle : first Si-containing particle : SWCNT : CMC : PAA : SBR = 60 : 40 : 0.1 : 1 : 1 : 2 to fabricate the first paste. Meanwhile, the materials were kneaded with water as a solvent so as to have a mass ratio of graphite particle : second Si-containing particle : SWCNT : CMC : PAA : SBR = 60 : 40 : 0.1 : 1 : 1 : 2 to fabricate the second paste.

The procedures for fabricating the first paste and the second paste were as follows. First, the graphite particles, the first Si-containing particles or the second Si-containing particles, the CMC and the PAA were dry-mixed to obtain a mixed powder. A SWCNT (a water-soluble paste with a solid content of 2%) and water were then added to this mixed powder, and the mixture was solid-kneaded. SBR and water were further added to the solid-kneaded mixture, and the mixture was mixed. In this way, the first paste and the second paste were fabricated.

The second paste was then applied onto both sides of a 10 $\mu$m thick copper foil and dried to fabricate second layers. The first paste was then applied onto the second layers and dried to fabricate first layers. The first layers and the second layers disposed on the copper foil were pressed to a predetermined thickness and processed to a predetermined dimension to obtain a negative electrode plate. The ratio (T1 : T2) of a thickness T1 of the first layer to a thickness T2 of the second layer was 50 : 50.

LiNi$_{1/3}$Co$_{1/3}$Mn$_{1/3}$O$_2$ (LNCM) as the positive electrode active material, acetylene black (AB) as a conductive material, and polyvinylidene fluoride (PVdF) as a binder were prepared. These were mixed with N-methylpyrrolidone (NMP) as a solvent so as to have a mass ratio of LNCM : AB : PVdF = 100 : 1 : 1 to fabricate a positive electrode paste. The positive electrode paste was applied onto both sides of a 10 $\mu$m thick aluminum foil and dried, then pressed to a predetermined thickness and processed to a predetermined dimension to obtain a positive electrode plate.

As a separator, a separator sheet in which HRL was disposed in a porous polyolefin sheet with a three-layer structure of PP/PE/PP was prepared. A lead was attached to each of the positive electrode and the negative electrode prepared as described above, and the electrodes were laminated via the separator to fabricate an electrode assembly. This electrode assembly was inserted into an exterior body composed of an aluminum laminate sheet, and a non-aqueous electrolyte solution was injected to seal an outer portion of the exterior body to fabricate a test cell of this example. The non-aqueous electrolyte solution was obtained by dissolving LiPF$_6$ as a support salt in a mixed solvent at a concentration of 1 mol/L, the mixed solvent containing ethylene carbonate (EC), fluoroethylene carbonate (FEC), ethyl methyl carbonate (EMC) and dimethyl carbonate (DMC) at a volume ratio of EC : FEC : EMC : DMC = 15 : 5 : 40 : 40.

<Example 2>

As the first Si-containing particle, a Si/C particle having a compression modulus of 1,300 MPa was used. As the second Si-containing particle, a Si/C particle having a compression modulus of 2,900 MPa was used. Otherwise, the same materials and procedures as those in Example 1 were used to fabricate a test cell of this example.

<Example 3>

The ratio (T1 : T2) of a thickness T1 of the first layer to a thickness T2 of the second layer was set to 90 : 10. Otherwise, the same materials and procedures as those in Example 1 were used to fabricate a test cell of this example.

<Example 4>

The ratio (T1 : T2) of a thickness T1 of the first layer to a thickness T2 of the second layer was set to 10 : 90. Otherwise, the same materials and procedures as those in Example 1 were used to fabricate a test cell of this example.

<Example 5>

A first paste containing first Si-containing particles was applied onto a copper foil to form a first layer. A second paste containing second Si-containing particles was applied onto the first layer to form a second layer. Otherwise, the same materials and procedures as those in Example 1 were used to fabricate a test cell of this example.

<Example 6>

The paste of Example 6 was prepared by kneading with water as a dispersion medium so that a mass ratio of graphite particle : first Si-containing particle : second Si-containing particle : SWCNT : CMC : PAA : SBR = 60 : 20 : 20 : 0.1 : 1 : 1 : 2. The procedures for preparing the paste of Example 6 were as follows. First, the graphite particles, the first Si-containing particles, the second Si-containing particles, CMC and PAA were dry-mixed to obtain a mixed powder. A SWCNT (a water-soluble paste with a solid content of 2%) and water were then added to this mixed powder, and the mixture was solid-kneaded. SBR and water were further added to the solid-kneaded mixture, and the mixture was mixed. In this way, the paste of Example 6 was prepared. Otherwise, the same materials and procedures as those in Example 1 were used to fabricate a test cell of this example.

<Example 7>

A first paste was applied onto both sides of a copper foil, dried, then pressed to a predetermined thickness, and processed to a predetermined dimension to thereby obtain a negative electrode plate. Otherwise, the same materials and procedures as those in Example 1 were used to fabricate a test cell of this example.

<Example 8>

A second paste was applied onto both sides of a copper foil, dried, then pressed to a predetermined thickness, and processed to a predetermined dimension to thereby obtain a negative electrode plate. Otherwise, the same materials and procedures as those in Example 1 were used to fabricate a test cell of this example.

With regard to the first Si-containing particles and the second Si-containing particles used in Examples 1 to 8, the compression modulus was measured in accordance with a manual of a device using a commercially available tester ("MCT-211", a microcompression tester manufactured by Shimadzu Corporation). First, the tester was used to compress one particle in the vertical direction to measure a displacement (compressive displacement) and a stress (compressive stress) during the compression. The average particle diameter of the Si-containing particle was then divided by the compressive displacement to calculate a compressive strain. Then, the compression modulus for one particle from the Si-containing particles was calculated using the following equation (A):

$$\text{Compression Modulus (MPa)} = \text{Compression Stress (MPa)} / \text{Compression Strain}$$

(A).

Here, the compression moduli of at least five Si-containing particles were calculated, and an arithmetic average value thereof was determined as the compression modulus of the Si-containing particle. The at least five Si-containing particles here were Si-containing particles having a particle diameter of 90% to 110% of the average particle diameter. The particle diameter of the Si-containing particle was measured when the compression modulus was measured by the tester.

[Measurement of Plate Hardness]

For the negative electrode of each example, an electrode plate hardness (spring constant) was measured. As a tester for the measurement, a commercially available tester ("AGX-10kNVD", a precision universal tester manufactured by Shimadzu Corporation) was used. Here, the negative electrode plate was first cut into a predetermined dimension, and a load was added in the stacking direction of the negative electrode plate, whereby the displacement amount was measured. Then, a spring constant (electrode plate hardness) of the negative electrode of each example was measured based on the following equation (B):

$$\text{Spring Constant (kN/mm)} = \text{Load (kN)/Displacement in Thickness Direction (mm)} \dots$$

$$(B).$$

The results are shown in the corresponding columns of Table 1.

[Measurement of Resistance Increase Rate]

<Initial Resistance Measurement>

The test cell was placed under an environment of 25°C. The test cell was charged with a constant current-constant voltage (CCCV) until the charging depth (SOC) reached 50%. The test cell was then left under an environment of 25°C for 1 hour. Thereafter, constant current (CC) discharge was performed for 10 seconds at a constant current of 1C. Then, an initial resistance of the test cell of each example was measured using the following equation (C):

$$\text{Initial Resistance} = [\text{Open Circuit Voltage (OCV)} - \text{Closed Circuit Voltage}$$

(CCV)]/Discharge Current (C). The closed circuit voltage in the equation is a voltage value after 10 seconds from the start of the discharge. The discharge current value is a current value after 10 seconds from the start of the discharge.

<High-Rate Cycle Test>

The test cell was placed under an environment of 25°C. The test cell was charged with CCCV until the charging depth (SOC) reached 50%. The test cell was then charged with CC at a current value of 1.5C for 400 seconds and then discharged with CC at a current value of 0.75C for 800 seconds. This sequence of charging and discharging was defined as one charge-discharge cycle. Consequently, 400 charge-discharge cycles were performed.

<Measurement of Resistance Increase Rate>

For the test cell after the above-mentioned 400 cycles, a battery resistance was calculated in the same manner as described above. Then, a resistance increase rate of the test cell of each example was calculated based on the following equation (D):

Resistance increase rate (%) = [battery resistance at 400th cycle/initial resistance] $\times$ 100         (D).

The results are shown in the corresponding columns of Table 1.

[Measurement of Electrode Plate Expansion Rate]

First, an initial thickness T0 was measured for the test cell of each example. Any three points were selected from the top, middle, and bottom of a wide surface of the test cell of each example, and the thicknesses at these three points in total of the test cell were measured. The arithmetic average value thereof was defined as the initial thickness T0. Then, for the test cell of each example, under an environment at 25°C, CCCV charging (at a rate of 0.4 C up to 4.2 V, followed by a cut-off at 0.1 C) was performed, and CC discharging (at a rate of 0.4C with a cut-off at 2.5 V) was then performed. This sequence of charging and discharging was defined as one cycle. Consequently, 250 cycles were performed. Then, the test cell of each example was discharged to 2.5 V and dismantled under an argon atmosphere, thereby removing a negative electrode. The negative electrode was immersed and washed in DMC and further dried. The thicknesses at the same three points as those at the time of the measurement of the initial thickness T0 were then measured, and the arithmetic average value thereof was defined as a thickness T250, which was the thickness obtained after the 250 cycles. Then, from the initial thickness T0 and the thickness T250 after the 250 cycles, a plate expansion rate (%) of the test cell of each example was measured based on the following formula (E):

Electrode Plate Expansion Rate (%) = (Thickness T250 after 250 cycles/initial thickness T0) $\times$ 100       Formula (E).

The results are shown in the corresponding columns in Table 1. Meanwhile, an example in which the electrode plate expansion rate (%) was 50% or less was evaluated as an example in which the electrode plate expansion rate of the test cell associated with the charging and discharging was suppressed. Furthermore, the "middle" of the wide surface is the center of the wide surface. The "top" of the wide surface is a region on one end side rather than the center of the wide surface. The "bottom" of the wide surface is a region on the opposite side of the above-mentioned first end rather than the center of the wide surface.

[Table 1]

Table 1

| | Negative electrode | | Compression modulus (Mpa) | | Electrode plate hardness | Electrode plate expansion rate | Resistance increase rate |
|---|---|---|---|---|---|---|---|
| | Structure | $T_2/T_1$ | First Si-containing particle | Second Si-containing particle | (kN/mm) | (%) | (%) |
| Example 1 | Double layer | 50/50 | 1100 | 3400 | 160 | 28 | 123 |
| Example 2 | Double layer | 50/50 | 1300 | 2900 | 185 | 30 | 121 |
| Example 3 | Double layer | 10/90 | 1100 | 3400 | 205 | 40 | 119 |
| Example 4 | Double layer | 90/10 | 1100 | 3400 | 135 | 36 | 128 |
| Example 5 | Double layer | 50/50 | 1100 | 3400 | 165 | 47 | 105 |
| Example 6 | Single layer | - | 1100 | 3400 | 230 | 52 | 125 |
| Example 7 | Single layer | - | 1100 | - | 105 | 56 | 135 |
| Example 8 | Single layer | - | - | 3400 | 335 | 59 | 130 |

For Examples 1 to 8, in the test cells of Examples 1 to 5, the negative electrode active material layer contained, as the negative electrode active material particle, the Si-containing particle (Si/C particle) that was a composite particle of a graphite substrate having a void and silicon disposed within the void of the graphite substrate. The hardness of the Si-containing particle contained in at least one of the layers (here, the first layer), into which the negative electrode active material layer was partitioned in its thickness direction, was lower than the hardness of the Si-containing particle contained in the other layer (here, the second layer). As shown in Table 1, in Examples 1 to 5 with such a configuration, an increase in the electrode plate expansion rate after the charge-discharge cycle was suppressed, and the resistance increase rate was reduced, compared to Examples 6 to 8, each of which had a single layer structure.

In the embodiments mentioned above, the negative electrode active material layer has a double layer structure consisting of the first layer and the second layer. However, the technology disclosed herein is not limited to the embodiments as long as the negative electrode active material layer includes a layer (first layer) containing Si-containing particles with relatively low hardness. For example, in the negative electrode active material layer, the first layer may be sandwiched between the second layer and the other second layer.

The technology disclosed herein may encompass the technologies listed in the following items.

Item 1:

An electricity storage device including: a negative electrode current collector and a negative electrode active material layer disposed on the negative electrode current collector,

the negative electrode active material layer contains, as a negative electrode active material particle, a Si-containing particle that is a composite particle of a graphite substrate having a void and silicon disposed within the void of the graphite substrate, and

a hardness of the Si-containing particle contained in at least one of layers, into which the negative electrode active material layer is partitioned in a thickness direction thereof, is lower than a hardness of the Si-containing particle contained in another layer.

Item 2:

The electricity storage device according to Item 1, wherein when the negative electrode active material layer is bisected in the thickness direction, a region relatively close to the negative electrode current collector is defined as a first region, and a region relatively far from the negative electrode current collector is defined as a second region, a first layer containing the Si-containing particles with relatively low hardness is disposed in the second region.

Item 3:

The electricity storage device according to Item 1, wherein when the negative electrode active material layer is bisected in the thickness direction, a region relatively close to the negative electrode current collector is defined as a first region, and a region relatively far from the negative electrode current collector is defined as a second region, a first layer containing the Si-containing particles with relatively low hardness is disposed in the first region.

Item 4:

The electricity storage device according to any one of Items 1 to 3, wherein the Si-containing particle with relatively high hardness has a compression modulus that is equal to or greater than twice that of the Si-containing particle with relatively low hardness when the compression modulus of the Si-containing particle with the relatively low hardness is set as 1. Item 5:

The electricity storage device according to any one of Items 1 to 4, wherein the Si-containing particle with relatively low hardness has a compression modulus of 250 MPa or more and less than 2,000 MPa.

Item 6:

The electricity storage device according to any one of Items 1 to 5, wherein the Si-containing particle with relatively high hardness has a compression modulus of 2,000 MPa or more and 5,000 MPa or less.

Item 7:

The electricity storage device according to any one of Items 1 to 6, wherein

the negative electrode active material layer includes a first layer containing the Si-containing particles with relatively low hardness, and a second layer containing the Si-containing particles with relatively high hardness, and

a ratio (T1 : T2) of a thickness T1 of the first layer to a thickness T2 of the second layer is from 10 : 90 to 90 : 10.

Item 8:

The electricity storage device of any one of Items 1 to 7, wherein the negative electrode active material layer further contains graphite particles as the negative electrode active material.

Item 9:

A method for manufacturing an electricity storage device including a negative electrode current collector and a negative electrode active material layer disposed on the negative electrode current collector, the method including:

disposing the negative electrode active material layer containing Si-containing particles as a negative electrode active material on the negative electrode current collector, wherein

the disposing the negative electrode active material layer comprises:

disposing a first layer using a first paste containing Si-containing particles with relatively low hardness; and disposing a second layer using a second paste containing Si-containing particles with relatively high hardness, and

the Si-containing particle is a composite particle of a graphite substrate having a void and silicon disposed within the void of the graphite substrate.

Item 10:
The manufacturing method according to Item 9, wherein preparation of the first paste and preparation of the second paste include:

dry-mixing the Si-containing particles with the relatively low hardness or the Si-containing particles with the relatively high hardness and a first binder to obtain a first mixed powder or a second mixed powder;
solid-kneading the first mixed powder or the second mixed powder, a conductive material and a dispersion medium to obtain a first kneaded product or a second kneaded product; and
mixing the first kneaded product or the second kneaded product, a second binder and a dispersion medium.

Item 11:
The manufacturing method according to Item 9 or 10, further including:

applying the second paste onto the negative electrode current collector to form the second layer; and
applying the first paste onto the second layer to form the first layer.

Item 12:
The manufacturing method according to Item 9 or 10, further including:

applying the first paste onto the negative electrode current collector to form the first layer; and
applying the second paste onto the first layer to form the second layer.

Item 13:
The manufacturing method according to any one of Items 9 to 12, including preparing, as the Si-containing particle with the relatively high hardness, a Si-containing particle having a compression modulus that is equal to or greater than twice that of the Si-containing particle with the relatively low hardness when the compression modulus of the Si-containing particle with the relatively low hardness is set as 1.
Item 14:
The manufacturing method according to any one of Items 9 to 13, wherein the Si-containing particle with the relatively low hardness has a compression modulus of 250 MPa or more and less than 2,000 MPa.
Item 15:
The manufacturing method according to any one of Items 9 to 14, wherein the Si-containing particle with the relatively high hardness has a compression modulus of 2,000 MPa or more and 5000 MPa or less.
Item 16:
The manufacturing method according to any one of Items 9 to 15, wherein the negative electrode active material layer further contains graphite particles as the negative electrode active material.

The above is a description of the embodiments of the technology disclosed herein, but those are illustrative only and do not limit the scope of the claims. Accordingly, the technology described in claims includes various variations and modifications of the embodiments exemplified above.

## Claims

1.  An electricity storage device (100) comprising:

a negative electrode current collector (62, 262); and
a negative electrode active material layer (64, 264) disposed on the negative electrode current collector (62, 262),

wherein,

the negative electrode active material layer (64, 264) contains, as a negative electrode active material particle, a Si-containing particle that is a composite particle of a graphite substrate having a void and silicon disposed within the void of the graphite substrate, and
a hardness of the Si-containing particle contained in at least one of layers, into which the negative electrode active material layer (64, 264) is partitioned in a thickness direction thereof, is lower than a hardness of the Si-containing particle contained in another layer.

2. The electricity storage device (100) according to claim 1, wherein when the negative electrode active material layer (64) is bisected in the thickness direction, a region relatively close to the negative electrode current collector (62) is defined as a first region (R1), and a region relatively far from the negative electrode current collector (62) is defined as a second region (R2), a first layer (641) containing the Si-containing particles with relatively low hardness is disposed in the second region (R2).

3. The electricity storage device (100) according to claim 1, wherein when the negative electrode active material layer (264) is bisected in the thickness direction, a region relatively close to the negative electrode current collector (262) is defined as a first region (R1), and a region relatively far from the negative electrode current collector (262) is defined as a second region (R2), a first layer (2641) containing the Si-containing particles with relatively low hardness is disposed in the first region (R1).

4. The electricity storage device (100) according to any one of claims 1 to 3, wherein the Si-containing particle with relatively high hardness has a compression modulus that is equal to or greater than twice that of the Si-containing particle with relatively low hardness when the compression modulus of the Si-containing particle with the relatively low hardness is set as 1.

5. The electricity storage device (100) according to any one of claims 1 to 3, wherein the Si-containing particle with relatively low hardness has a compression modulus of 250 MPa or more and less than 2,000 MPa.

6. The electricity storage device (100) according to any one of claims 1 to 3, wherein the Si-containing particle with relatively high hardness has a compression modulus of 2,000 MPa or more and 5,000 MPa or less.

7. The electricity storage device (100) according to any one of claims 1 to 3, wherein the negative electrode active material layer (64, 264) includes a first layer (641, 2641) containing the Si-containing particles with relatively low hardness, and a second layer (642, 2642) containing the Si-containing particles with relatively high hardness, and a ratio (T1 : T2) of a thickness T1 of the first layer (641, 2641) to a thickness T2 of the second layer (642, 2642) is from 10 : 90 to 90 : 10.

8. The electricity storage device (100) according to any one of claims 1 to 3, wherein the negative electrode active material layer (64, 264) further contains graphite particles as the negative electrode active material.

9. A method for manufacturing an electricity storage device (100) comprising a negative electrode current collector (62, 262) and a negative electrode active material layer (64, 264) disposed on the negative electrode current collector (62, 262), the method comprising:

   disposing the negative electrode active material layer (64, 264) containing Si-containing particles as a negative electrode active material on the negative electrode current collector (62, 262), wherein
   the disposing the negative electrode active material layer (64, 264) comprises:

   disposing a first layer (641, 2641) using a first paste containing Si-containing particles with relatively low hardness; and
   disposing a second layer (642, 2642) using a second paste containing Si-containing particles with relatively high hardness, and
   the Si-containing particle is a composite particle of a graphite substrate having a void and silicon disposed within the void of the graphite substrate.

10. The manufacturing method according to claim 9, wherein preparation of the first paste and preparation of the second paste comprise:

    dry-mixing the Si-containing particles with the relatively low hardness or the Si-containing particles with the relatively high hardness and a first binder to obtain a first mixed powder or a second mixed powder;
    solid-kneading the first mixed powder or the second mixed powder, a conductive material and a dispersion medium to obtain a first kneaded product or a second kneaded product; and
    mixing the first kneaded product or the second kneaded product, a second binder and a dispersion medium.

11. The manufacturing method according to claim 9, further comprising:

applying the second paste onto the negative electrode current collector (62) to form the second layer (642); and applying the first paste onto the second layer (642) to form the first layer (641).

12. The manufacturing method according to claim 9, further comprising:

applying the first paste onto the negative electrode current collector (262) to form the first layer (2641); and applying the second paste onto the first layer (2641) to form the second layer (2642).

13. The manufacturing method according to any one of claims 9 to 12, comprising preparing, as the Si-containing particle with the relatively high hardness, a Si-containing particle having a compression modulus that is equal to or greater than twice that of the Si-containing particle with the relatively low hardness when the compression modulus of the Si-containing particle with the relatively low hardness is set as 1.

14. The manufacturing method according to any one of claims 9 to 12, wherein the Si-containing particle with the relatively low hardness has a compression modulus of 250 MPa or more and less than 2,000 MPa.

15. The manufacturing method according to any one of claims 9 to 12, wherein the Si-containing particle with the relatively high hardness has a compression modulus of 2,000 MPa or more and 5000 MPa or less.

FIG.1

FIG.2

60

64

641 642

R2
R1

62

641 642

U
D

FIG.3

260

264

2642 2641

R2
R1

262

2642 2641

U
D

FIG.4

## EUROPEAN SEARCH REPORT

Application Number

EP 25 16 2053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/249646 A1 (INOUE KAORU [JP] ET AL) 12 August 2021 (2021-08-12)<br>* figures 5,6 *<br>* paragraph [0012]; example 2 *<br>* paragraph [0056] *<br>* paragraph [0063] *<br>* paragraph [0053] *<br>----- | 1-15 | INV.<br>H01M4/38<br>H01M4/04<br>H01M4/134<br>H01M4/1395<br>H01M4/36<br>H01M4/133<br>H01M4/1393 |
| A | US 2023/327110 A1 (ONODERA NAOTO [JP] ET AL) 12 October 2023 (2023-10-12)<br>* paragraph [0067] - paragraph [0071] *<br>----- | 1-14 | H01M4/587<br>H01M10/0525<br>H01M4/02 |
| A | US 2023/387386 A1 (MORIKAWA YUKI [JP] ET AL) 30 November 2023 (2023-11-30)<br>* claims *<br>* paragraph [0024] - paragraph [0039] *<br>----- | 1-14 | |
| A | WO 2024/048733 A1 (PANASONIC ENERGY CO LTD [JP]) 7 March 2024 (2024-03-07)<br>* claims *<br>* paragraph [0014] - paragraph [0025] *<br>----- | 1-14 | TECHNICAL FIELDS SEARCHED (IPC)<br><br>H01M |

The present search report has been drawn up for all claims

| Place of search | Date of completion of the search | Examiner |
|---|---|---|
| The Hague | 25 July 2025 | Whelan, Natalie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 2053

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2025

| Patent document cited in search report | | Publication date | Patent family member(s) | | Publication date |
|---|---|---|---|---|---|
| US 2021249646 | A1 | 12-08-2021 | CN | 113258034 A | 13-08-2021 |
| | | | JP | 7403337 B2 | 22-12-2023 |
| | | | JP | 2021128845 A | 02-09-2021 |
| | | | US | 2021249646 A1 | 12-08-2021 |
| US 2023327110 | A1 | 12-10-2023 | CN | 116914098 A | 20-10-2023 |
| | | | JP | 7478183 B2 | 02-05-2024 |
| | | | JP | 2023156005 A | 24-10-2023 |
| | | | US | 2023327110 A1 | 12-10-2023 |
| US 2023387386 | A1 | 30-11-2023 | CN | 117154008 A | 01-12-2023 |
| | | | JP | 7496855 B2 | 07-06-2024 |
| | | | JP | 2023175175 A | 12-12-2023 |
| | | | US | 2023387386 A1 | 30-11-2023 |
| WO 2024048733 | A1 | 07-03-2024 | JP | WO2024048733 A1 | 07-03-2024 |
| | | | WO | 2024048733 A1 | 07-03-2024 |

EPO FORM P0459

For more details about this annex : see Official Journal of the European Patent Office, No. 12/82

**REFERENCES CITED IN THE DESCRIPTION**

**Patent documents cited in the description**

- JP 6385749 B
- JP 5522817 B
- JP 2006196447 A
- WO 2020031869 A